# EUROPEAN PATENT SPECIFICATION

(11) **EP 3 169 098 B1**
(45) Date of publication and mention of the grant of the patent: **01.05.2019**
(21) Application number: 15306805.1
(22) Date of filing: 13.11.2015
(51) Int. Cl.: H04W 16/00, H04W 52/14

(54) **METHOD, CONFIGURATION APPARATUS AND COMPUTER READABLE MEDIUM TO CONFIGURE A PLURALITY OF CELLS**
VERFAHREN, KONFIGURATIONSVORRICHTUNG UND COMPUTERLESBARES MEDIUM ZUR KONFIGURATION EINER VIELZAHL VON ZELLEN
PROCÉDÉ, APPAREIL DE CONFIGURATION ET SUPPORT LISIBLE PAR ORDINATEUR PERMETTANT DE CONFIGURER UNE PLURALITÉ DE CELLULES

(43) Date of publication of application: 17.05.2017
(73) Proprietor: Alcatel Lucent, 91620 Nozay (FR)
(72) Inventor: HO, Lester Tse Wee, Dublin (IE); WIELGOSZEWSKA, Anna, Dublin (IE); GACANIN, Haris, 2018 Antwerp (BE)
(74) Representative: Nokia EPO representatives

(56) References cited:
- EP-A1- 2 793 503
- WO-A1-2015/007301
- US-A1- 2014 086 138

## Description

### FIELD OF INVENTION

The present subject matter relates to the automatic deployment, also known as plug and play deployment, of cells within a telecommunication network, for example a cellular network implemented according to one the of the 3GPP specifications. Ideally these cells will follow the principles of Self-Organization Network (SON) and configure themselves, as well as dynamically optimize their parameters when the network is running. The cells are also known as Femtocell Access Points or small cells or nodes or base stations.

### BACKGROUND

When dealing with the automatic deployment and configuration of cells, numerous network parameters heavily depend on each other, and SON functions often intend to modify them at the same time which leads to configuration conflicts. Within the next sections the scope of three SON functions are explained and the potential conflicts between them are described.

The first function is the Cell ID Assignment function. Cell IDs are parameters broadcasted by cells in order to allow User Equipments (UEs) to discover and distinguish between different cells within their vicinity, and therefore play a part in procedures related to network access and mobility. Cell IDs are assigned from a pool of available IDs (e.g., 512 in UMTS and 504 in LTE), which are usually further limited to a relatively number, e.g. 20 solely for the use by cells, in order to reduce the amount of scanning that the UEs have to perform to reduce delays during mobility and improve battery life. The aim of Cell ID allocation optimization is to assign cell IDs from those available in the pool in order to minimize the three following aspects.
- The first is the collision which happens when UEs can detect two or more cells that use the same IDs. This causes problems with network access and call failures to occur because of strong interference of the pilot signals.
- The second is weak collisions. In LTE, this is where UEs are within range of two or more cells that use different IDs but causing interference in the control channels. This occurs when Cell IDs are separated by 6, e.g. Cell IDs 1 and 7, 2 and 8, and so on. This causes decoding problems and increased call drops due to interference.
- The third is confusions. This is where a cell has two or more neighbours that use the same IDs. This can cause handover failures to UEs moving out of the cell as the handover may be directed to the wrong neighbour.
In dense cell deployments, due to the large number of cells located within close vicinity of each other, an optimized allocation of Cell IDs from the limited pool is important.

The second function deals with the coverage adjustment. Pilot channel transmission power impacts the coverage area of a cell, and is typically changed to optimize aspects such as the coverage and perform load balancing, which affects the overall network performance. Coverage optimization SON algorithm will either increase or decrease the pilot transmit power of cells in reaction to changes in the traffic load or when cells are added or removed.

The third function deals with the idle mode procedure. Idle mode procedures aim at reducing the overall network power consumption by putting cells into a low-power idle mode during periods of low traffic load. When in idle mode, the cell's radio transmission functionality is switched off. The SON algorithm managing the transition of cells between idle and active modes has to do so without causing coverage holes or bad service levels.

Whenever a cell is placed into idle mode, adjustments to the coverage of neighboring cells are made to compensate. However, there is a limit to the number of cells that can be put into idle mode. In order to preserve coverage, several cells are designated as "coverage" cells by the idle mode procedure. Coverage cells are defined as cells that cannot be put into idle mode, as doing so will result in coverage gaps to occur. They are therefore permanently switched on, even when load is zero. The selection of coverage cells is done during initial deployment, or when new cells are installed, or existing cells are removed permanently. The SON algorithm will select, from all the cells installed, the lowest number of cells needed to provide coverage throughout the intended are of coverage.

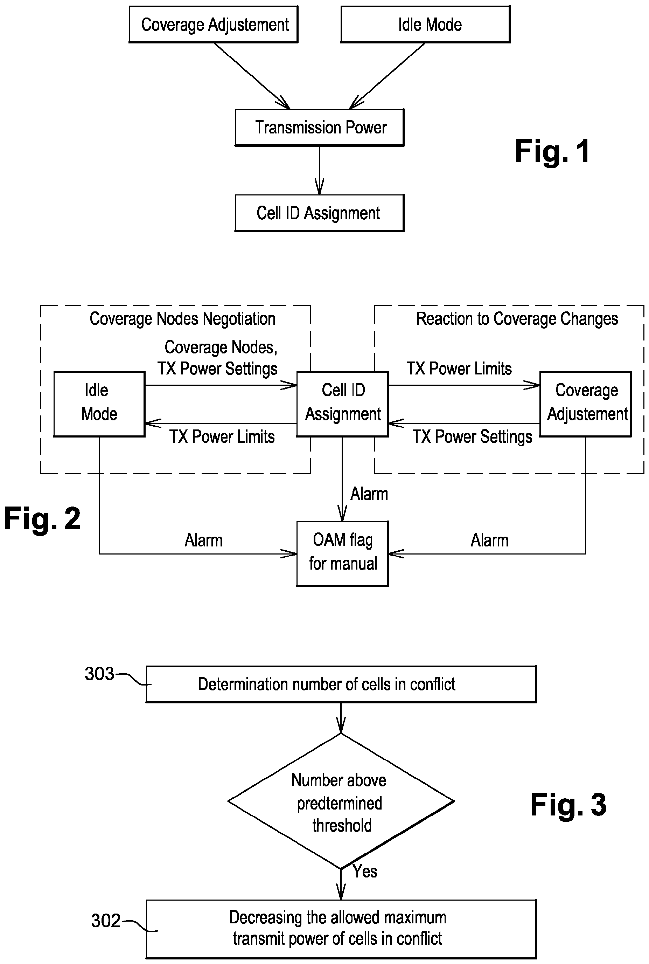

Given the three different SON functions described above, the possible conflicts of the functions are shown in figure 1. In this figure the arrows indicate the change effect. The possible conflicts include:
- Conflict between the coverage adjustment function and the Cell ID assignment function. Increase of the pilot signal transmission power in a network with stable cell ID assignment may cause cell ID conflicts, such as collisions and confusions leading to dropped calls and handover problems. This happens as with the power increase, visibility of the cells increases as well, which may result in assignment conflicts among the cells that had no such visibility before.
- Conflict between the idle mode function and the Cell ID assignment function. When a cell is switched on, it typically operates at its maximum pilot signal transmission power allowed by the hardware. As it needs to have a cell ID assigned to become operable, it is crucial to not only assign a cell ID but also coordinate its power level so as to mitigate the conflicts as explained above. The interaction between these two functions affects also the process of the coverage cells selection.

As mentioned previously, the aim of the idle mode function here is to select the lowest number of cells as coverage cells. However, for the best selection based on this criterion it may be impossible to provide a conflict free cell ID assignment, which is crucial when the coverage cells are the only active ones, i.e., all non-coverage cells are in idle mode. The following table presents a case where only the last line (line 5) presents an arrangement that respect the different constraints of a telecommunication network.

| Proposal | Coverage Cells [#] | Collisions-weak collisions-confusions [#] |
|---|---|---|
| 1 | 6 | 1-1-1 |
| 2 | 6 | 0-2-1 |
| 3 | 7 | 0-1-1 |
| 4 | 7 | 0-0-2 |
| 5 | 8 | 0-0-0 |

For example, if there is a low number of coverage cells selected, then the coverage cells have to transmit at higher powers to maintain coverage. So it is crucial that the idle mode function also takes into consideration the impact of cell ID conflicts when selecting coverage cells.

The aim of the present subject matter is to satisfy these contradictory objectives. Another example is found in patent document EP2793503.

### SUMMARY

This summary is provided to introduce concepts related to the automatic deployment of cells within a telecommunication network. The invention is defined by the attached claims.

In one implementation, a method to configure a plurality of cells belonging to a telecommunication network is described. Each cell is associated to an individual maximum transmit power allowed to transmit by the cell. Each cell is identified by a so called cell ID. The method comprises a step of determining a number of cells in conflict and if the number of cells in conflict is above a predetermined threshold the method comprises a step of decreasing the individual maximum transmit power associated to at least one of the cells in conflict.

In another implementation, a configuration apparatus adapted to configure a plurality of cells belonging to a telecommunication network is described is described. Each cell is associated to an individual maximum transmit power allowed to transmit by the cell. Each cell is identified by a so called cell ID. The configuration apparatus comprises one or more processor(s) and a memory coupled to the processor(s). The processor is configured to determine a number of coverage cells in conflict an if the number of cells in conflict is above a predetermined threshold the processor is configured to decrease the individual maximum transmit power associated to at least one of the coverage cells in conflict.

In another implementation a computer-readable medium is described. The computer readable medium has embedded thereon a method to configure a plurality of cells belonging to a telecommunication network. Each cell is associated to an individual maximum transmit power allowed to transmit by the cell. Each cell is identified by a so called cell ID. The method comprises a step of determining a number of cells in conflict. If the number of cells in conflict is above a predetermined threshold the method comprises a step of decreasing the individual maximum transmit power associated to at least one of the cells in conflict.

### BRIEF DESCRIPTION OF THE FIGURES

The detailed description is given with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
Figure 1 presents Functions Dependency on Transmission Power.
Figure 2 presents a general description of the method object of the present subject matter.
Figure 3 presents an embodiment of the method object of the present subject matter.
Figures 4-a and 4-b present an embodiment of the method object of the present subject matter.
Figures 5-a and 5-b present two embodiments of the method object of the present subject matter.
Figure 6 presents an embodiment of the method object of the present subject matter.
Figure 7 presents a generic overview of the system object of the present subject matter.

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

The present subject matter proposed a method to control the interactions between the Cell ID function with the coverage and idle mode SON functions. This is done by allowing the Cell ID function to regulate the maximum pilot signal transmit powers and influence the choice of the coverage cells, as shown. This is described in Figure 2.

The present subject matter is largely based on the two transmission power settings that describe the minimum and maximum transmission power settings. These transmission power settings are called Ptxlower and Ptxupper:
- Ptxlower is calculated and set by the coverage or idle mode functions whenever cells are added or removed, either during deployment or idle mode procedures, and is used to ensure that the functions do not lower a cell's transmit power to an extent that coverage gaps occur.
- Ptxupper is typically set by default to the highest transmit power as designed in the cell's hardware implementation.
When determining the transmit power of a cell this transmit power should be above the Ptxlower and below Ptxupper.

The figure 3 presents an embodiment of a method to configure a plurality of cells, for example femtocell access points (FAP), belonging to a telecommunication network, each cell being associated to an individual maximum transmit power allowed to transmit by the cell,
each cell being identified by a so called Cell ID,
The said method comprising the following steps;
- a step 301 of determining a number of cells in conflict and
if the number of cells in conflict is above a predetermined threshold the method comprises the following steps:
- a step 302 of decreasing the individual maximum transmit power associated to at least one of the cells in conflict.

In an embodiment the step 301 of determining a number of cells in conflict is configured:
- To determine neighbourhood information, indicating all the neighbours for each of the cells: this could be obtained through base station to base station measurements or user measurements.
- To determine the number of collisions, for example by checking for every cell how many neighbours use the same cell ID as the considered cell.
- To determine the number of weak collisions (in LTE), for example by checking for every cell how many neighbours use the same Cell ID shift (Cell ID mod 6) as the considered cell.
- To determine the number of confusions, for example by checking for every cell how many neighbours of the considered cell use the same cell IDs, i.e., different from the considered cell but the same among the neighbours of the considered cell.;
The number of cells in conflict is the sum of the number of collisions, number of weak collisions (if LTE) and the number of confusions.

In an embodiment the step 302 of decreasing the individual maximum transmit power associated to at least one of the coverage cells in conflict is configured to decrease the maximum transmit power by 5dBm.
In other words if the number of conflicts calculated in step 303 is above a threshold, the maximum transmit powers (Ptxupper) of the coverage cells that have conflicts is reduced by a set value, for example by 5 dBm. With the revised Ptxupper, the steps 301 to 302 are repeated.

In an embodiment the predetermined threshold is a fraction of ratio of the number of cells to the number of cell IDs (rounded to the lower integer). For an example deployment of 100 cells, and 20 CIDs available this ratio is equal 5 cells/CID. For example we can take the fraction as being the half of this ration 0.5*5= 2.5 and so 2 is taken as the predetermined threshold. For situations where CIDs is higher than the number of cells, e.g. for coverage nodes, the predetermined threshold becomes 0. In the case of a predetermined threshold equal to 0, the allowed maximal transmit power of the cells in conflict is decreased as soon as there is one conflict.

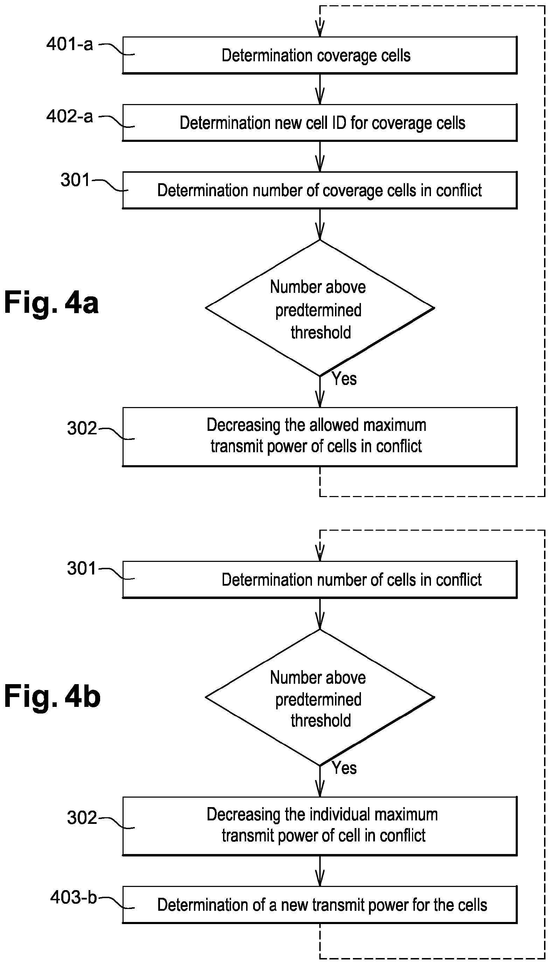

The figure 4-a presents an embodiment of the method to configure a plurality of cells. The method also comprises the following steps;
- a step 401-a of determining coverage cells and
- a step 402-a of determining a new cell ID for the coverage cells and
wherein the step 301 of determining a number of cells in conflict is configured to determine a number of coverage cells in conflict and
if the number of coverage cells in conflict is above a predetermined threshold the method comprises the following steps:
- the step 302 of decreasing the individual maximum transmit power is configured to decrease the individual maximum transmit power associated to at least one of the coverage cells in conflict,
more particularly the steps being realized iteratively until the number of cells in conflict is below the predetermined threshold.

In other words the figure 4-a presents a method to configure a plurality of cells belonging to a telecommunication network,
each cell being associated to an individual maximum transmit power allowed to transmit by the cell,
each cell being identified by a so called cell ID,
the said method comprising the following steps;
- a step 401-a of determining coverage cells and
- a step 402-a of determining a new cell ID for the coverage cells and
- a step 301 of determining a number of coverage cells in conflict and
if the number of cells in conflict is above a predetermined threshold the method comprises the following steps:
- a step 302 of decreasing the individual maximum transmit power associated to at least one of the coverage cells in conflict,
more particularly the steps being realized iteratively until the number of cells in conflict is below the predetermined threshold.

In an embodiment the step 401-a of determining coverage cells is configured :
- To measure, for each cell, a path loss between this cell and the neighbouring cells and
- To calculate an estimated coverage of each cell using this path loss information, by considering that the cell is transmitting using their maximum allowed transmit power and
- To calculate a combined coverage area of a plurality of group of cells according to the estimated coverage of each cell of the group of cells and
- To determine the coverage cells as the cells of the group of cells that can provide continuous coverage over the targeted area with the lowest number of cells is then selected.

In other words using this embodiment the path loss between cells is obtained through measurements. Using this path loss information, we are able to calculate the estimated coverage of a cell if the cell is using the maximum allowed transmit power. As this enables us to estimate the coverage area of each cell, we can calculate the overall combined coverage area of a group of cells. A global search of different combinations of cells and their combined coverage areas when transmitting at their respective Ptxupper limit are calculated. The combination of cells that can provide continuous coverage over the targeted area (e.g. in a building) with the lowest number of cells is then selected. These are candidates for coverage cells.

In an embodiment the step 402-a of determining a new cell ID for the coverage cells is configured :
- To determine a neighbourhood information for each coverage cell. This neighbourhood information indicate all the neighbors for each of the cells: this could be obtained through base station to base station or user measurements.
- To determine available cell IDs (exclude the colliding and confusing ones from the Cell ID set)
Furthermore, for each coverage cell, the step 402-a of determining a new cell ID is also configured
- To assign one of the available, cell IDs to the cell
- If there is no available Cell IDs, to assign the cell ID of one of the least connected neighbour cell, for example the least connected cell is the cell with the signal is received at the minimal level if all the neighbours cells transmit at the their maximal allowed transmit power.

In an embodiment the steps of the method of the figure 4-a are realized after a detection of a modification of a topology of the telecommunication network.

Within the previously described method the cells that could be in conflict are among the active cell of the telecommunication system.

The figure 4-b presents an embodiment of the method to configure a plurality of cells belonging to a telecommunication network,
each cell being associated to an individual maximum transmit power allowed to transmit by the cell, and to a transmit power representing the actual power used to transmit by the cell,
each cell being identified by a so called cell ID,
the said method comprising the following steps, realized after the detection that for at least one cell, a new transmit power has been set-up,
- a step 301 of determining a number of cells in conflict,
if the number of cells in conflict is above a predetermined threshold the method comprises the following steps:
- a step 302 of decreasing the maximum transmit power associated to at least one of the cells in conflict,
- a step 403-b of determining, for at least one of the cells, a new transmit power,
more particularly the steps being realized iteratively until the number of cells in conflict is below the predetermined threshold.

In an embodiment the step 403-b of determining the new transmit power is configured to determine the cells with transmit power above their individual maximum allowed transmit power and to decrease the transmit power of these cells in order to have the new transmit power below the maximum allowed transmit power.
In other words the new transmit power has to conform to the revised maximum transmit powers determined in step 302, so any cells that now has a transmit power higher than the maximum will reduce its power accordingly. If this results in unbalanced load, the Coverage Adjustment Function (see Figure 2) with modify the transmit powers of the cells to perform load balancing, with the new maximum transmit power limits.

In an embodiment of the previous method the steps are realized after the detection that, for at least one cell, a new transmit power has been set-up,

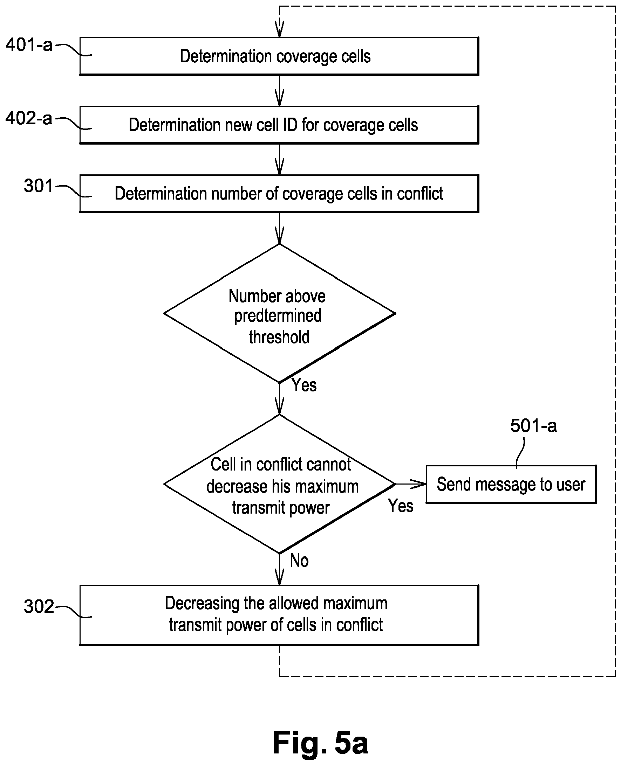

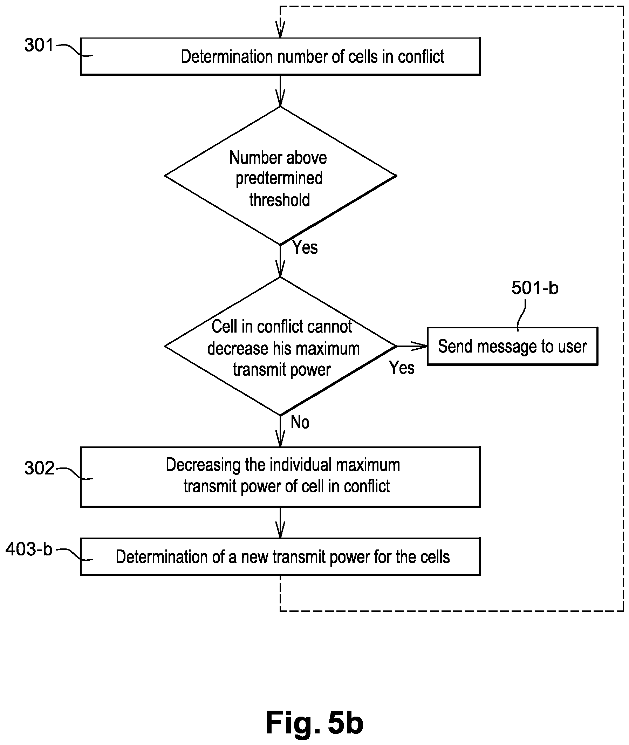

In another embodiment, presented figure 5-a and figure 5-b, the different methods of the previous embodiments also comprises a step 501-a or 501-b of sending a warning message to a user, if the maximum transmit power, associated to one of the cells in conflict cannot be decreased, indeed Ptxupper cannot be set below Ptxlower.

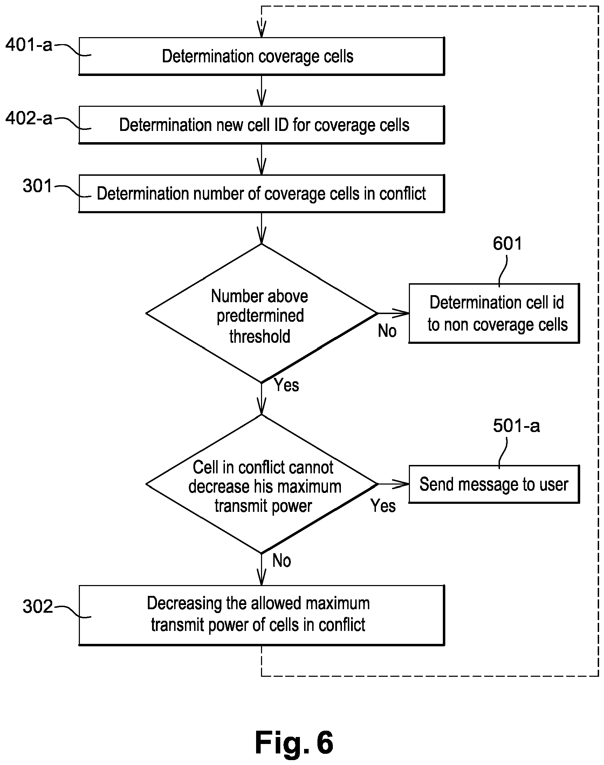

In an embodiment presented figure 6, the method also comprises a final step 601 of determining a new cell ID for the non-coverage cells, if the number of cells in conflict is below the predetermined threshold

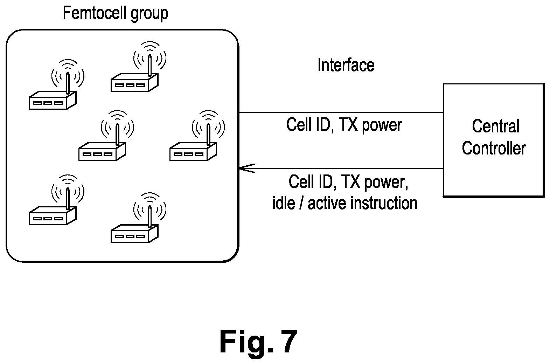

In an embodiment of the present subject matter a first configuration apparatus is described. This first configuration apparatus, also known as central controller, could be integrated in a telecommunication system as presented figure 7. This first configuration apparatus is adapted to configure a plurality of cells belonging to a telecommunication network, each cell is associated to an individual maximum transmit power allowed to transmit by the cell, each cell is identified by a so called cell ID. This first configuration apparatus comprises one or more processor(s), I/O interface(s), a memory coupled to the processor(s) and transmission means. The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

The processor is configured ;
- to determine a number of coverage cells in conflict and
if the number of cells in conflict is above a predetermined threshold the processor is configured:
- to decrease the individual maximum transmit power associated to at least one of the coverage cells in conflict.

In an embodiment of the present subject matter a second configuration apparatus is described. This second configuration apparatus, also known as central controller, could be integrated in a telecommunication system as presented figure 7. This second configuration apparatus is adapted to configure a plurality of cells belonging to a telecommunication network, each cell is associated to an individual maximum transmit power allowed to transmit by the cell, each cell is identified by a so called cell ID. This second configuration apparatus comprises one or more processor(s), I/O interface(s), a memory coupled to the processor(s) and transmission means. The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

The processor is configured ;
- to determine coverage cells,
- to determine new cell ID for the coverage cells and
- to determine a number of coverage cells in conflict and
if the number of cells in conflict is above a predetermined threshold the processor is configured:
- to decrease the individual maximum transmit power associated to at least one of the coverage cells in conflict.
In an embodiment of the second configuration apparatus the processor is configured to realize the different determination until the number of cells in conflict is below the predetermined threshold.

In an embodiment of the present subject matter a third configuration apparatus is described. This third configuration apparatus, also known as central controller, could be integrated in a telecommunication system as presented figure 7. This third configuration apparatus is adapted to configure a plurality of cells belonging to a telecommunication network, each cell is associated to an individual maximum transmit power allowed to transmit by the cell and a transmit power representing the actual power used to transmit by the cell, each cell is identified by a so called cell ID. This third configuration apparatus comprises one or more processor(s), I/O interface(s), a memory coupled to the processor(s) and transmission means. The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

the processor is configured ;
- to determine a number of cells in conflict,
if the number of cells in conflict is above a predetermined threshold the processer is configured :
- to decrease the allowed maximum transmit power associated to at least one of the cells in conflict,
- to determine, for at least one of the cells, a new transmit power,
more particularly the steps being realized iteratively until the number of cells in conflict is below the predetermined threshold.
In an embodiment of the third configuration apparatus the processor is configured to realize the different determination until the number of cells in conflict is below the predetermined threshold.

The functions realized by the processor may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes computer modules and data. The computer modules include routines, programs, objects, components, data structures, etc., which perform particular tasks or implement particular abstract data types. The data, amongst other things, serves as a repository for storing data processed, received, and generated by one or more of the computer modules.

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media.

An embodiment of the subject matter is a first computer program, adapted to realize the method of the figure 3. The aim of this method is to configure a plurality of cells belonging to a telecommunication network,
each cell being associated to an individual maximum transmit power allowed to transmit by the cell,
each cell being identified by a so called cell ID,
the said method comprises the following steps;
- a step 301 of determining a number of cells in conflict and
if the number of cells in conflict is above a predetermined threshold the method comprises the following steps:
- a step 302 of decreasing the individual maximum transmit power associated to at least one of the cells in conflict.

In an embodiment a computer-readable medium having embedded thereon the first computer program described in the previous section is proposed.

An embodiment of the subject matter is a second computer program, adapted to realize the method of the figure 4-a. The aim of this method is to configure a plurality of cells belonging to a telecommunication network. Each cell is associated to an individual maximum transmit power allowed to transmit by the cell. Each cell is identified by a so called cell ID. The method comprises the following steps;
- a step 401-a of determining coverage cells and
- a step 402-a of determining a new cell ID for the coverage cells and
- a step 301 of determining a number of coverage cells in conflict and
if the number of cells in conflict is above a predetermined threshold the method comprises the following steps:
- a step 302 of decreasing the individual maximum transmit power associated to at least one of the coverage cells in conflict,
more particularly the steps being realized iteratively until the number of cells in conflict is below the predetermined threshold.

In an embodiment a computer-readable medium having embedded thereon the second computer program described in the previous section is proposed.

An embodiment of the subject matter is a third computer program, adapted to realize the method of the figure 4-b. The aim of this method is to configure a plurality of cells belonging to a telecommunication network. Each cell is associated to an individual maximum transmit power allowed to transmit by the cell and a transmit power representing the actual power used to transmit by the cell. Each cell is identified by a so called cell ID. The method comprises the following steps:
- a step 301 of determining a number of cells in conflict,
if the number of cells in conflict is above a predetermined threshold the method comprises the following steps:
- a step 302 of decreasing the allowed maximum transmit power associated to at least one of the cells in conflict,
- a step 403-b of determining, for at least one of the cells, a new transmit power,
more particularly the steps being realized iteratively until the number of cells in conflict is below the predetermined threshold.

In an embodiment a computer-readable medium having embedded thereon the third computer program described in the previous section is proposed.

## Claims

1. Method for configuring a plurality of cells belonging to a telecommunication network, each cell being associated to an individual maximum transmit power allowed to transmit by the cell, each cell being identified by a so called cell ID, said method comprising the following steps;
. a step (401-a) of determining coverage cells and
. a step (402-a) of determining a new cell ID for the coverage cells and
. a step (301) of determining a number of cells in conflict and wherein the step (301) of determining a number of cells in conflict is configured to determine a number of coverage cells in conflict and if the number of coverage cells in conflict is above a predetermined threshold,
the method comprising the following steps:
. a step (302) of decreasing the individual maximum transmit power associated to at least one of the cells in conflict wherein the step (302) of decreasing the individual maximum transmit power is configured to decrease the individual maximum transmit power associated to at least one of the coverage cells in conflict;
more particularly the steps being realized iteratively until the number of cells in conflict is below the predetermined threshold.

2. Method according to claim 1 wherein the steps are realized after a detection of a modification of a topology of the telecommunication network.

3. Method according to claim 1
also comprising
if the number of cells in conflict is above a predetermined threshold the method comprising the following steps:
• a step (403-b) of determining, for at least one of the cells, a new transmit power,
more particularly the steps being realized iteratively until the number of cells in conflict is below the predetermined threshold.

4. Method according to claim 1 or 3wherein the steps are realized after the detection that for at least one cell a new transmit power has been set-up.

5. Method according to any of the previous claims also comprising;
• a step (501-a or 501-b) of sending a warning message to a user, if the maximum transmit power, associated to one of the cells in conflict cannot be decreased.

6. Method according to claim 1 or 2 also comprising;
• a final step (601) of determining a new cell ID for the non-coverage cells, if the number of cells in conflict is below the predetermined threshold

7. Configuration apparatus adapted to configure a plurality of cells belonging to a telecommunication network, each cell being associated to an individual maximum transmit power allowed to transmit by the cell, each cell being identified by a so called cell ID,
the configuration apparatus comprising; one or more processor(s) and a memory coupled to the processor(s); the processor being configured:
.to determine coverage cells
to determine new cell ID for the coverage cells and
to determine a number of coverage cells in conflict and
if the number of coverage cells in conflict is above a predetermined threshold, the processor is configure to:
decrease the individual maximum transmit power associated to at least one of the coverage cells in conflict,
the processor being configured to realize the different determinations until
the number of cells in conflict is below the predetermined threshold.

8. Configuration apparatus adapted according to claim 7 wherein the processor is also configured to:
• to determine a number of cells in conflict,
if the number of cells in conflict is above a predetermined threshold the processor being configured:
• to decrease the allowed maximum transmit power associated to at least one of the cells in conflict,
• to determine, for at least one of the cells, a new transmit power,

9. A computer readable medium having embedded thereon a method to configure a plurality of cells belonging to a telecommunication network, each cell being associated to an individual maximum transmit power allowed to transmit by the cell, each cell being identified by a so called cell ID, the said method comprising the following steps;
. a step (401-a) of determining coverage cells and
. a step (402-a) of determining a new cell ID for the coverage cells and
. a step (301) of determining a number of cells in conflict and wherein the step (301) of determining a number of cells in conflict is configured to determine a number of coverage cells in conflict and if the number of coverage cells in conflict is above a predetermined threshold, the method comprising the following steps:
. a step (302) of decreasing the individual maximum transmit power associated to at least one of the cells in conflict wherein the step (302) of decreasing the individual maximum transmit power is configured to decrease the individual maximum transmit power associated to at least one of the coverage cells in conflict,
the steps being realized iteratively until the number of cells in conflict is below the predetermined threshold.

10. A computer-readable medium according to the claim 9
also comprising
if the number of cells in conflict is above a predetermined threshold the method comprises the following steps:
• a step (403-b) of determining, for at least one of the cells, a new transmit power,
more particularly the steps being realized iteratively until the number of cells in conflict is below the predetermined threshold.

## Patentansprüche

1. Verfahren zur Konfiguration einer Vielzahl von Zellen, die zu einem Telekommunikationsnetzwerk gehören, wobei jede Zelle einer einzelnen maximalen Übertragungsleistung zugeordnet ist, die von der Zelle übertragen werden darf, wobei jede Zelle durch eine sogenannte Zellen-ID identifiziert wird, wobei das Verfahren die folgenden Schritte umfasst:
einen Schritt (401-a) zum Bestimmen von Abdeckungszellen, und
einen Schritt (402-a) zum Bestimmen einer neuen Zellen-ID für die Abdeckungszellen, und
einen Schritt (301) zum Bestimmen einer Anzahl von in Konflikt stehenden Zellen und wobei der Schritt (301) zum Bestimmen einer Anzahl von in Konflikt stehenden Zellen konfiguriert ist, um eine Anzahl von in Konflikt stehenden Abdeckungszellen zu bestimmen,
und wenn die Anzahl der in Konflikt stehenden Abdeckungszellen über einem vorbestimmten Schwellenwert liegt,
das Verfahren die folgenden Schritte umfasst:
einen Schritt (302) des Verringerns der einzelnen maximalen Übertragungsleistung, die mindestens einer der in Konflikt stehenden Zellen zugeordnet ist, wobei der Schritt (302) des Verringerns der einzelnen maximalen Übertragungsleistung konfiguriert ist, um die einzelne maximale Übertragungsleistung zu verringern, die mindestens einer der in Konflikt stehenden Abdeckungszellen zugeordnet ist;
wobei die Schritte insbesondere wiederholt ausgeführt werden, bis die Anzahl der in Konflikt stehenden Zellen unter dem vorbestimmten Schwellenwert liegt.

2. Verfahren nach Anspruch 1, wobei die Schritte nach einer Erkennung einer Modifikation einer Topologie des Telekommunikationsnetzes realisiert werden.

3. Verfahren nach Anspruch 1, auch umfassend:
wenn die Anzahl der in Konflikt stehenden Zellen über einem vorbestimmten Schwellenwert liegt, dass das Verfahren die folgenden Schritte umfasst:
einen Schritt (403-b) zum Bestimmen, für mindestens eine der Zellen, einer neuen Übertragungsleistung, wobei die Schritte insbesondere wiederholt ausgeführt werden, bis die Anzahl der in Konflikt stehenden Zellen unter dem vorbestimmten Schwellenwert liegt.

4. Verfahren nach Anspruch 1 oder 3, wobei die Schritte nach der Erkennung, dass für mindestens eine Zelle eine neue Übertragungsleistung eingerichtet wurde, realisiert werden.

5. Verfahren nach einem der vorhergehenden Ansprüche, auch umfassend:
einen Schritt (501-a oder 501-b) des Sendens einer Warnmeldung an einen Benutzer, wenn die maximale Übertragungsleistung, die einer der in Konflikt stehenden Zellen zugeordnet ist, nicht verringert werden kann.

6. Verfahren nach Anspruch 1 oder 2, auch umfassend:
einen letzten Schritt (601) des Bestimmens einer neuen Zellen-ID für die Zellen ohne Abdeckung, wenn die Anzahl der in Konflikt stehenden Zellen unter dem vorbestimmten Schwellenwert liegt.

7. Konfigurationsvorrichtung, die dazu vorgesehen ist, eine Vielzahl von Zellen zu konfigurieren, die zu einem Telekommunikationsnetzwerk gehören, wobei jede Zelle einer einzelnen maximalen Übertragungsleistung zugeordnet ist, die von der Zelle übertragen werden darf, wobei jede Zelle durch eine sogenannte Zellen-ID identifiziert wird,
wobei die Konfigurationsvorrichtung umfasst:
einen oder mehrere Prozessoren und einen mit dem/den Prozessor(en) gekoppelten Speicher; wobei der Prozessor konfiguriert ist, um:
die Abdeckungszellen bestimmen,
eine neue Zellen-ID für die Abdeckungszellen zu bestimmen, und
eine Anzahl von in Konflikt stehenden Abdeckungszellen zu bestimmen, und
wobei, wenn die Anzahl der in Konflikt stehenden Abdeckungszellen über einem vorbestimmten Schwellenwert liegt, der Prozessor konfiguriert ist, um:
die einzelne maximale Übertragungsleistung, die mindestens einer der in Konflikt stehenden Abdeckungszellen zugeordnet ist, zu verringern,
wobei der Prozessor konfiguriert ist, um die verschiedenen Bestimmungen zu realisieren, bis die Anzahl der in Konflikt stehenden Zellen unter dem vorbestimmten Schwellenwert liegt.

8. Konfigurationsvorrichtung, die nach Anspruch 7 vorgesehen ist, wobei der Prozessor auch konfiguriert ist, um:
eine Anzahl von in Konflikt stehenden Zellen zu bestimmen,
wobei, wenn die Anzahl der in Konflikt stehenden Zellen über einem vorbestimmten Schwellenwert liegt, der Prozessor konfiguriert ist, um:
die zulässige maximale Übertragungsleistung, die mindestens einer in Konflikt stehenden Zelle zugeordnet ist, zu verringern,
um für mindestens eine der Zellen eine neue Übertragungsleistung zu bestimmen.

9. Computerlesbares Medium, auf dem ein Verfahren zum Konfigurieren einer Vielzahl von Zellen, die zu einem Telekommunikationsnetz gehören, eingebettet ist, wobei jede Zelle einer einzelnen maximalen Übertragungsleistung zugeordnet ist, die von der Zelle übertragen werden darf, wobei jede Zelle durch eine sogenannte Zellen-ID identifiziert wird, wobei das Verfahren die folgenden Schritte umfasst:
einen Schritt (401-a) zum Bestimmen von Abdeckungszellen, und
einen Schritt (402-a) zum Bestimmen einer neuen Zellen-ID für die Abdeckungszellen, und
einen Schritt (301) zum Bestimmen einer Anzahl von in Konflikt stehenden Zellen und wobei der Schritt (301) zum Bestimmen einer Anzahl von in Konflikt stehenden Zellen konfiguriert ist, um eine Anzahl von in Konflikt stehenden Abdeckungszellen zu bestimmen, und wenn die Anzahl von in Konflikt stehenden Abdeckungszellen über einem vorbestimmten Schwellenwert liegt, das Verfahren die folgenden Schritte umfasst:
einen Schritt (302) des Verringerns der einzelnen maximalen Übertragungsleistung, die mindestens einer der in Konflikt stehenden Zellen zugeordnet ist, wobei der Schritt (302) des Verringerns der einzelnen maximalen Übertragungsleistung konfiguriert ist, um die einzelne maximale Übertragungsleistung zu verringern, die mindestens einer der in Konflikt stehenden Abdeckungszellen zugeordnet ist,
wobei die Schritte wiederholt ausgeführt werden, bis die Anzahl der in Konflikt stehenden Zellen unter dem vorbestimmten Schwellenwert liegt.

10. Computerlesbares Medium nach Anspruch 9, ferner umfassend, wenn die Anzahl der in Konflikt stehenden Zellen über einem vorbestimmten Schwellenwert liegt, dass das Verfahren die folgenden Schritte umfasst:
einen Schritt (403-b) zum Bestimmen, für mindestens eine der Zellen, einer neuen Übertragungsleistung, wobei die Schritte insbesondere wiederholt ausgeführt werden, bis die Anzahl der in Konflikt stehenden Zellen unter dem vorbestimmten Schwellenwert liegt.

## Revendications

1. Procédé pour configurer une pluralité de cellules appartenant à un réseau de télécommunication, chaque cellule étant associée à une puissance de transmission maximum individuelle permise de transmettre par la cellule, chaque cellule étant identifiée par un élément communément appelé ID de cellule, ledit procédé comprenant les étapes suivantes :
. une étape (401-a) de la détermination de cellules de couverture, et
. une étape (402-a) de la détermination d'un nouvel ID de cellule pour les cellules de couverture, et
. une étape (301) de la détermination d'un nombre de cellules en conflit et dans lequel l'étape (301) de la détermination d'un nombre de cellules en conflit est configurée pour déterminer un nombre de cellules de couverture en conflit,
et, si le nombre de cellules de couverture en conflit est supérieur à un seuil prédéterminé,
le procédé comprenant les étapes suivantes :
. une étape (302) de la réduction de la puissance de transmission maximum individuelle associée à au moins une des cellules en conflit, dans lequel l'étape (302) de la réduction de la puissance de transmission maximum individuelle est configurée pour réduire la puissance de transmission maximum individuelle associée à au moins une des cellules de couverture en conflit ;
plus particulièrement les étapes étant réalisées de façon itérative jusqu'à ce que le nombre de cellules en conflit soit inférieur au seuil prédéterminé.

2. Procédé selon la revendication 1, dans lequel les étapes sont réalisées après une détection d'une modification d'une topologie du réseau de télécommunication.

3. Procédé selon la revendication 1, comprenant en outre :
si le nombre de cellules en conflit est supérieur à un seuil prédéterminé, le procédé comprenant les étapes suivantes :
• une étape (403-b) de la détermination, pour au moins une des cellules, d'une nouvelle puissance de transmission, plus particulièrement les étapes étant réalisées de façon itérative jusqu'à ce que le nombre de cellules en conflit soit inférieur au seuil prédéterminé.

4. Procédé selon la revendication 1 ou 3, dans lequel les étapes sont réalisées après la détection que, pour au moins une cellule, une nouvelle puissance de transmission a été établie.

5. Procédé selon l'une quelconque des revendications précédentes, comprenant en outre ;
• une étape (501-a ou 501-b) de l'envoi d'un message d'avertissement à un utilisateur, si la puissance de transmission maximum, associée à une des cellules en conflit ne peut pas être réduite.

6. Procédé selon la revendication 1 ou 2, comprenant en outre :
• une étape finale (601) de la détermination d'un nouvel ID de cellule pour les cellules de non-couverture, si le nombre de cellules en conflit est inférieur au seuil prédéterminé.

7. Appareil de configuration adapté pour configurer une pluralité de cellules appartenant à un réseau de télécommunication, chaque cellule étant associée à une puissance de transmission maximum individuelle permise de transmettre par la cellule, chaque cellule étant identifiée par un élément communément appelé ID de cellule, l'appareil de configuration comprenant :
un ou plusieurs processeur(s) et une mémoire couplée au(x) processeur(s) ; le processeur étant configuré :
pour déterminer des cellules de couverture,
pour déterminer un nouvel ID de cellule pour les cellules de couverture, et
pour déterminer un nombre de cellules de couverture en conflit et, si le nombre de cellules de couverture en conflit est supérieur à un seuil prédéterminé, le processeur est configuré pour :
réduire la puissance de transmission maximum individuelle associée à au moins une des cellules de couverture en conflit,
le processeur étant configuré pour réaliser les différentes déterminations jusqu'à ce que le nombre de cellules en conflit soit inférieur au seuil prédéterminé.

8. Appareil de configuration adapté selon la revendication 7, dans lequel le processeur est également configuré pour :
• déterminer un nombre de cellules en conflit,
si le nombre de cellules en conflit est supérieur à une seuil prédéterminé, le processeur étant configuré :
• pour réduire la puissance de transmission maximum permise associée à au moins une des cellules en conflit,
• pour déterminer, pour au moins une des cellules, une nouvelle puissance de transmission.

9. Support lisible par ordinateur ayant, incorporé sur celui-ci, un procédé pour configurer une pluralité de cellules appartenant à un réseau de télécommunication, chaque cellule étant associée à une puissance de transmission maximum individuelle permise de transmettre par la cellule, chaque cellule étant identifiée par un élément communément appelé ID de cellule, ledit procédé comprenant les étapes suivantes ;
. une étape (401-a) de la détermination de cellules de couverture, et
. une étape (402-a) de la détermination d'un nouvel ID de cellule pour les cellules de couverture, et
. une étape (301) de la détermination d'un nombre de cellules en conflit et dans lequel l'étape (301) de la détermination d'un nombre de cellules en conflit est configurée pour déterminer un nombre de cellules de couverture en conflit et, si le nombre de cellules de couverture en conflit est supérieur à une seuil prédéterminé, le procédé comprenant les étapes suivantes :
. une étape (302) de la réduction de la puissance de transmission maximum individuelle associée à au moins une des cellules en conflit, dans lequel l'étape (302) de la réduction de la puissance de transmission maximum individuelle est configurée pour réduire la puissance de transmission maximum individuelle associée à au moins one des cellules de couverture en conflit,
les étapes étant réalisées de façon itérative jusqu'à ce que le nombre de cellules en conflit soit inférieur au seuil prédéterminé.

10. Support lisible par ordinateur selon la revendication 9, comprenant en outre, si le nombre de cellules en conflit est supérieur à une seuil prédéterminé, le procédé comprend les étapes suivantes :
• une étape (403-b) de la détermination, pour au moins une des cellules, d'une nouvelle puissance de transmission, plus particulièrement les étapes étant réalisées de façon itérative jusqu'à ce que le nombre de cellules en conflit soit inférieur au seuil prédéterminé.
